# EUROPEAN PATENT SPECIFICATION

(11) **EP 1 063 285 B1**
(45) Date of publication and mention of the grant of the patent: **04.02.2004**
(21) Application number: 00304850.1
(22) Date of filing: 08.06.2000
(51) Int. Cl.: C12C 5/00, C12C 11/00, C12C 12/00

(54) **Process for the preparation of a beer-type beverage**
Verfahren zur Herstellung eines Getränkes des Types Bier
Procédé de préparation d'une boisson du type bière

(30) Priority: 16.06.1999 GB 9913903; 05.01.2000 GB 0000032
(43) Date of publication of application: 27.12.2000
(73) Proprietor: CERESTAR HOLDING B.V., 4551 LA Sas Van Gent (NL)
(72) Inventor: Van Gorkum, Christaan Johanna Jacoba, 5121 AA Rijen (NL)
(74) Representative: Wilkinson, Stephen John

(56) References cited:
- EP-A- 0 949 328
- GB-A- 1 060 681
- GB-A- 1 387 998
- GB-A- 2 157 314
- US-A- 4 073 947

## Description

### Technical field

The present invention is in the field of the preparation of alcoholic beverages, more specifically the invention relates to a beer-type beverage. The normal process for producing beer makes use of malted barley or -wheat and sometimes adjuncts are added; together with hop this mixture which is known as wort is fermented. In the process of the present invention the mailing process is completely abolished, a suitable amino acid (or peptide) composition and a sugar composition (glucose syrup) are separately prepared and the mixture thereof, together with hop and yeast, is directly fermented.

### Background of the invention

Beer can be defined in general terms as an alcoholic beverage prepared by the fermentation of starch-based raw materials. The process for brewing beer consists essentially of two steps, malting and fermentation. The basic ingredients for beer have been unchanged over the centuries; they are: malted barley or malted wheat, water, hop and yeast. The following steps characterise the standard beer-preparation process.

Malting of cereals by germination. The starting material is mostly barley used in the form of malt. During the malting process the raw hard barley is converted to sweet tasting malt. The barley kernel contains a germ, which takes up only a minor part of the volume of the kernel, the rest (the endosperm) being composed of proteinaceous cell tissue filled with starch, which serves as the nourishment for the young plant. The aim of the malting is to liberate enzymes, that solubilise the starch and the protein to bring them in a form accessible to fermentation.

The main types of enzymes that are developed during the malting process, are amylolytic and proteolytic enzymes. These enzymes break down the starch and proteins respectively to less complex watersoluble compounds, i.e. fermentable sugars, amino acids and small peptides.

The resulting malt is subject of a lot of variation, not only due to the variable quality of the grain but also due to variation in growing and harvesting conditions (composition, microbiology, moisture level) the post-harvesting handling of the grain (drying, storage, mixing of qualities, microbiology, sprouting force...), but also by the malting process itself (types and amounts of amylolytic and proteolytic enzymes, level of lipoxygenases, under- or overmodification of the malt,...).

The malting is followed by a whole series of steps.
Crushing the malted barley to obtain a 'grist'. Adding waters and hops to the grist to obtain the mash. Optionally, adding adjuncts such as corn grits, starch or glucose. Heating the mixture to allow the enzymes to react with the starch and the protein. Separating the resulting aqueous extract, known as 'wort' which is rich in fermentable sugars and other nutrients. Boiling the wort with hop to add flavours and to stop enzymatic activity. Clarifying and cooling the wort. Fermenting the wort with yeast to convert the sugar to ethanol and carbon dioxide resulting in green or young beer. Maturing or lagering the fermented beer, generally by means of a second fermentation. Filtering, pasteurizing and packaging the beer.

The standard first stages of the preparation of beer (brewing) i.e. the preparation of the mash is also subject a lot of variation. Besides the variation of quality of the malt (composition, under- or overconverted malt, type and amount of amylolytic and proteolytic enzymes, concentration of lypoxygenases, etc.), also the wort preparation itself will influence the final quality of the beer: grinding level (concentration of lipoxygenase and fat oxidation, germ grinding and fat oxidation...), efficiency of starch and protein conversion, boiling and enzyme inactivation (composition of fermentables, foaming properties,...), wort clarification will all influence the final quality of the beer.

The wort production process is clearly highly critical and depends on a lot of variable factors. This makes the process difficult to control, unreliable and expensive. The production of malt is relatively expensive for several reasons, including the labor, time and equipment required. The cost is also due to the high price of barley of a suitable quality. Quality control of the wort is expensive and labour intensive. Moreover, the byproducts of the wort production (drash) are expensive to dry, and have a low value. Replacement of the final wort by a correct mixture of fermentable sugars and -protein (free amino acids, small peptides...) and micronutrients for the yeast is therefore highly desirable.

It has already become a common practice, provided it is allowed in the frame of food regulations, to add the so-called brewing adjuncts to the malted barley, thereby replacing a part of the barley. Suitable brewing adjuncts include, maize, rice, sorghum, or grits produced from them, and sugar. Preferably these adjuncts are made in the form of syrups, which can easily be fermented. Pre-hydrolyzed products are added to the malt mash and syrups are added to the wort at the time of boiling. The use of the brewing adjuncts needs to be carefully controlled to ensure that the product has a good taste, color and foam formation.

A lot of research has been undertaken to try to develop a fast and reliable process leading to beer of a constant and optimal quality. Possible solutions to the problems have been described in the following publications, which describe replacement of part of the (malted) barley.

US patent 4,165,388 relates to a method for preparing Brewer's mashes wherein a part (up to 25%) of the malted barley is replaced with torrefied, expanded barley. This product is prepared by heating unmalted barley having a protein content of at least 12 % to a temperature sufficient to expand the barley to such a degree that a given volume of barley before heating weighs about 1.4 to about 1.75 times the weight of the same volume of barley after heating.

US patent 5,273,762 relates to a process for the production of beer by fermenting wort comprising malted barley and a concentrated starch solution derived from barley, for example, in the form of the secondary fraction (B-starch) from a barley starch process, or a barley syrup derived from such a fraction. Only a part of the malted barley is replaced.

International patent application WO 93/19160 describes a process for preparing brewery raw material from barley. The barley is ground in dry state, from the ground barley a fine fraction is separated by sifting which contains starch in abundance, and a little fat, protein, polyphenol and β-glucan, and its particle size being 150 to 300µm, for use as brewery material together with malt. The material of this process is used for replacing up to about 50% by weight of the malted barley.

Dutch patent NL 1327104 describes a process for the preparation of a beer-type beverage wherein in order to prepare the wort, proteolytic and diastatic enzymes are added to unmalted grain, preferably barley, followed by a temperature treatment at different temperatures and for different time spans. In this way the desired ratio of fermentable and non-fermentable carbohydrates is obtained.

GB 2 157 314 discloses a horne brewing system comprising a syrup with less than 15% of a combination of glucose, fructose and sucrose, 50-55% maltose and 5-10% maltotriose ( % by weight of total carbohydrate).

These patents however solve only partially some drawbacks of the normal brewing process. The invention that is described herein overcomes most of the drawbacks of the malting and brewing processes of beer production.

### Summary of the invention

The present invention describes a process for preparing a beer-type beverage wherein the wort is prepared from a starch-based glucose syrup, soluble proteinaceous material, water and hop, characterised in that the starch-based glucose syrup has the following composition (% on dry solids):
fructose 0.5-5%, dextrose 10-20%, dp2 35-60%, dp3 10-25%, dpn/maltodextrins balance
(and wherein no malt is used). Thus a method is disclosed for the preparation of a beer-type beverage wherein the malting step is abolished.

The wort is prepared by mixing a sugar (or carbohydrate) composition such as a glucose syrup, with a proteinaceous material in which amino acids and/or small peptides, high molecular weight soluble proteins and micronutrients are present, hops and water (if necessary). This mixture is then boiled and fermented after cooling with a suitable yeast strain. Preferably, the carbohydrate composition is a starch-based glucose syrup and the protein source is cereal based. The carbohydrate syrup composition and the amino acid/small peptide composition are such that they are adapted to the yeast strains which are used for the fermentation.

The carbohydrate composition is also important for the mouthfeel of the beverage. Carbohydrate compositions of syrups, which are found to be suitable for preparing beer-type beverages, should contain at least 60% fermentable sugars on dry substance. Fermentable sugars utilized by the brewer's yeast are glucose, fructose, galactose, sucrose, maltose and maltotriose. This sugar composition can be obtained from starch, dextrin, sucrose or any other industrial source. The exact carbohydrate composition can vary with the strain of yeast used to brew the beer and should be determined by a traditional wort analysis.

The amino acid/small peptides composition is chosen in such a way that all amino acids essential for growth of the yeast type, used are present. Preferably the composition comprises at least one of the amino acids selected from the following group: glutamine, aspartic acid, asparagine, glutamic acid, serine, threonine, lysine and arginine; provided that the amino acid composition is sufficient to enable fermentation with a brewer's yeast.

The present invention also relates to a beer-type beverage obtained by the new process.

### Detailed description of the invention

Basically, the present invention discloses a process for making beer wherein up to 100% adjuncts are used. Malt, which is normally used, is replaced with a glucose syrup and a protein fraction. By making the right choice the composition of the mixture resembles wort and the adjunct conversion and mashing have become superfluous. The present invention describes the process of making a beer-type beverage wherein the wort is prepared by mixing glucose syrup, a protein fraction and hop.

After boiling and cooling the wort, yeast is added, the wort is fermented and the further process is identical with the normal beer preparation process. Extensive introductions to brewing science are available and include: Malting and Brewing Science J.S. Hough (2 vol.) (1982), Mouterij- en brouwerij technologie, G. Baetslé, (1984) and cursus Mouterij en Brouwerij , S.Samay (1998).

The process for preparing a beer-type beverage, as disclosed in the present patent application, consists essentially of the following steps:
Mixing a glucose syrup rich in fermentable sugars and other nutrients with a protein and/or amino acid mixture to obtain a 'wort'type composition;
Boiling the wort with hop to add flavour;
Cooling and clarifying the wort;
Fermenting the wort with yeast to convert the sugar to ethanol and carbon dioxide resulting in green or young beer;
Maturing or lagering the fermented beer, generally by means of a second fermentation;
Filtering, pasteurizing and packaging the beer.

The present invention is based on the recognition that it is essential that the wort comprise certain carbohydrate and proteinaceous components. The composition has to be chosen in such a way that the yeast can ferment and produce alcohol from the sugars the second prerequisite is that the composition is such that the product has all desirable characteristics in terms of taste, mouthfeel, aroma, foam formation and -stability. It is known that a good tasting beer cannot be obtained starting from 100% corn or wheat starch, as this material would not contain enough protein. After analysis of typical wort compositions it was found that the mixing of certain commercial glucose syrups with a protein source rich in micronutrients of the yeast would result in a wort-like composition. Surprisingly, fermentation of such a composition resulted in a beer-type beverage having all the characteristics of beer, including color, mouthfeel, foam formation and stability, taste, alcohol content and shelf-life stability.

The glucose syrup is prepared from starch. The starch is obtained from tapioca, wheat, corn, sorghum, potato, barley or rice, preferably wheat is used as the basis for the starch. The starch is isolated by the normal processes, which have extensively been described in the literature.

The starch is further treated in order to degrade amylose and amylopectin to such a degree that the product becomes available to yeast fermentation. The carbohydrate composition is determined in such a way that the carbohydrate as a mixture of starch product and the part which is added with the protein fraction resembles the carbohydrate composition normally found in the wort. This is a composition which contains a ratio of fermentable and non-fermentable carbohydrates which is in agreement with the carbohydrates which are preferentially used by the selected yeast strain.

Yeast can use dextrose, fructose, maltose and maltotriose as a carbon source, higher polymers of glucose are not metabolized by brewer's yeast. A viable yeast in the active growth stage is able to utilize fermentable carbohydrates immediately. However, the rate of maltose utilization is subject to catabolic repression by glucose, care should therefore be taken to utilize a composition which does not contain too much glucose. The wort was found to contain from 40 to 90% of fermentable sugars expressed as dp1-dp2-dp3 (dp =degree of polymerisation).
Carbohydrate compositions of syrups, which are found to be suitable for preparing the beer-type beverage of the present invention are those containing at least one of the following fermentable sugars utilized by the brewer's yeast; glucose, fructose, galactose, sucrose, maltose and maltotriose.

A more specific mixture of carbohydrates suitable for performing the process of the present invention is (in % on dry weight basis):

| | |
|---|---|
| fructose | 0.5 - 5 % |
| dextrose | 10- 20% |
| dp2 | 35-60% |
| dp3 | 10-25% |
| dpn/maltodextrins | balance |

The specific syrup (Cerestar C 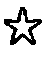 Sweet™M01516) which was used in the example had the following composition:

| | |
|---|---|
| dry substance % | 80 |
| dextrose equivalent | 51,3 |

| carbohydrate composition (% on dry substance) : | |
|---|---|
| dextrose | 12 |
| maltose | 47 |
| maltotriose | 16 |
| higher sugars | 25 |

The protein fraction may be extracted from any cereal source (or bran or fiber) as long as it contains the amino acids, which are essential for the yeast that is used for fermentation. The amino acids may be prepared from the same source as where the starch comes from, it is also possible to use the protein obtained from another source. A preferred source is the wheat soluble protein fraction. To be able to use the protein fraction the proteins are pretreated and blended in such a way that a composition of peptides and amino acids is obtained which is in accordance with the needs of the yeast strains, which are used for fermentation.

The protein fraction should contain a certain amino acid composition. Aspartic acid asparagine and glutamic acid are effective as single amino acid source.

Amino acids have been classified according to the time taken by brewer's yeast to take up 50% of each acid from the brewer's wort. Four groups are distinguished from fastest to least well absorbed.
Group A : Glutamine, aspartic acid, asparagine, glutamic acid, serine, threonine, lysine, arginine.
Group B : Valine, methionine, leucine, isoleucine, histidine.
Group C : Glycine, phenylalanine, tyrosine, tryptophan, alanine, ammonia.
Group D : Proline.

A suitable amino acid composition contains the following amino acids (in g/100g protein):
Asx: 2.5-8.0, Thr: 2.0-5.0, Ser: 4.0-6.5, Glx: 5.0-34.0, Pro: 3.0-15.0, Gly : 2.0-6.0, Ala: 3.0-6.0, Cys: 3.0-14.0 Val: 2.0-8.0, Met: 0.0-8.0, Ile: 1.0-5.0, Leu: 6.0-10.0, Tyr: 2.0-4.0, Phe: 3.0-5.0, Lys: 1.0-14.0, His : 1.0-5.0, Arg: 2.0-15.0, Trp: 0-1.0.

The protein solution used in the present case was a purified water extract from wheat flour, rich in free- and easily absorbable amino acids such as glutamin and asparagine and their respective acids, and leucine. The dry solids content of this water extract is 2,5 to 7,5 % ds which consist of: 18-25 % (w/w) protein; 1,25-1,5 % amino acids; 2,5-5 % starch. It further contains 20-30 % reducing sugar; 18-25 % pentosans; 1-1,25 % beta glucans; 2,5-7,5 % lactic acid, and a lot of micronutrients for the yeast(1,5-2,5 % potassium; 0,15-0,2 % magnesium;; 0,15-0,4 % sulphate; 1-3 % phosphate). This protein rich solution was treated by means of specific proteolitic enzymes (Umamizyme; Flavourzyme; Sternzym B5026; Sternzym B5021; Sumizyme FP; Promod 192P), and therefore it consisted of the correct level of free amino acids and peptides and soluble HMW proteins. It is aimed to become 100-200 mg Free Amino Nitrogen per liter final wort before fermentation. The specific enzymatic treatment has been done in such a way that undesired peptide tastes are eliminated and the minimum quantity of free amino acids are made available.

The advantage of the present process is that there is an optimal control over the composition of the carbohydrate fraction and of the protein fraction.
This makes it possible for the brewer to skip the malting and the brewing process. Mixing of the carbohydrate composition and the protein composition is done in such an amount and ratio as to obtain an optimal composition in relation to the optimal growth medium composition of yeast which is used for fermentation.

The process of the present invention is easily adaptable to other yeast strains. The process without the malting step is much cheaper than the process wherein the malting step is performed. The malting and brewing processes require skilled persons and is critical to the process moreover it takes time and space to perform the process in a optimal way. All this has become superfluous when the process of the present invention is applied.

The process of the present invention is also faster so that in times of an increased demand it becomes possible to immediately increase the production. With the standard process the brewers generally have a problem in summer as it is difficult to predict the amount of beer which is needed and when weather improves suddenly, then not enough malted material is available to increase beer production. With the process of the present invention the fermentation can start almost immediately when demand rises.

The process is also better reproducible as the composition of the feed streams are easy to analyze and better to control than the malting of barley. The enzymatic reaction which serves to optimize the carbohydrate and amino acid compositions in normal brewing process is highly critical and depends on a lot of variables such as type of barley, malting time, temperature etc. Moreover, undesirable enzyme activities such as the formation of fat oxidising enzymes (lipoxygenase) is excluded, as is the formation of pro-oxidation products like alpha and beta acids. This undoubtely leads to much better controlled quality of the final beer.

The process of the present invention resulted in a beer-type beverage having characteristics which are similar to that of normal beer.
The process of the present invention is disclosed in the following examples.
The fermentation and further treatment are the same as the normally employed process and although there may be some variations between the different brewers the present process can be applied in the existing equipment and does not require modification except for the absence of the malting step.

### Example I

### Beer preparation using the high gravity process

32 kg of glucose syrup (81% dry substance, 51 DE, commercially available as CERESTAR 01635) was blended with 125 liter of protein solution (4% ds). 40 g of hop extracts (PhiCO2 1996 - Pfizer) are added to the mixture. The pH was corrected to 5.2 and 40 g of caramel was added to improve the color to 7 EBC.
The protein solution used in this example was a purified water extract from wheat flour, rich in free and easily absorbable amino acids like glutamin and asparagine and their respective acids, and leucine having a dry solids content of 4% ds and containing 18% (w/w) protein. This protein solution was not hydrolysed and therefore it consisted of amino acids, and peptides and (small) proteins. The amino acid composition of this solution was determined and gave the following result (g/100g protein) : Asx: 5.7 (3.5-7.2), Thr: 3.3 (2.6-4.5), Ser: 6.5 (4.2-6.1), Glx: 18.2 (5.9-32.9), Pro: 8.4 (3.3-14.4), Gly : 4.5 (2.8-5.6), Ala: 4.3 (3.6-5), Cys: 7.5 (3.5-12.8) Val: 4.4 (2.2-7.3), Met 3.2 (0.4-7.9), Ile: 2.8 (1.4-3.7), Leu: 8.5 (6.7-9.6), Tyr: 2.5 (2.2-3.0), Phe: 3.9 (3.2-4.5), Lys: 7.9 (1.5-12.3), His 2.6 (1.9-3.8), Arg: 8.0 (2.8-14.6), Trp:0.2 (0-0.5).

The "wort" was boiled for one hour. After cooling to 10°C, the density of the wort was 16°Plato and diluted to 14°Plato.

The wort was pitched with a strain of the *Saccharomyces carlsbergensis* at 1.3 kg/hl.
The wort was pumped into the fermentation tanks and fermented at constant temperature of 11.5°C for 19 days.

After fermentation the beer was chilled to -1.5°C and lagered for one week at 0°C.
After the aging period, the beer was given a final filtration and is pasteurized before bottling.

The product was found to have a satisfactory beer taste.

### Example 2

### Beer-type beverage preparation

23,4 kg of glucose syrup (80% dry substance; 51,3 DE, commercially available as CERESTAR 01516) was blended with 176 liter of protein rich solution (about 4% ds). 95 g of hop pellets (cv. Hallertau Magnum) is added to the mixture.

The pH of the mixture has a value of 5,2.
The protein solution used in this example was a purified water extract from wheat flour, rich in free and easily absorbable amino acids like glutamin and asparagine and their respective acids, and leucine.The dry solids content of this water extract is 2,5 to 7,5 % ds which consist of: 18-25 % (w/w) protein; 1,25-1,5 % amino acids; 2,5-5 % starch; 20-30 % reducing sugar; 18-25 % pentosans; 1-1,25 % beta glucans; 2,5-7,5 % lactic acid; 0,2-0,3 % sodium; 1,5-2,5 % potassium; 0,15-0,2 % magnesium; 0,5-1 % chlorine; 0,15-0,4 % sulphate; 1-3 % phosphate. This protein rich solution was treated by means of specific proteolitic enzymes (Umamizyme; Flavourzyme; Sternzym B5026; Sternzym B5021; Sumizyme FP; Promod 192P), and therefore it consisted of the correct level of free amino acids and peptides and soluble HMW proteins. It is aimed to become 100-200 mg Free Amino Nitrogen per liter final wort before fermentation. The specific enzymatic treatment has been done in such a way that undesired peptide tastes are eliminated and the minimum quantity of free amino acids are made available.

The "wort" was boiled for one hour.

This wort was pumped into a whirl pool separator in order to separate deposits before transferring the wort through the cooling unit, where the wort also was aerated.

After cooling to 15°C, the density of the corrected wort was 12 °Plato.

The wort was pitched with lager yeast, a Saccharomyces cerevisae.

The wort was fermented at a constant temperature of 12°C for 14 days.

After fermentation the "beer" was cooled and matured for one week at 0°C.

After the aging period, the beer was given a final Kieselguhr filtration and was filled in 10 liter kegs.

The product was found to have a satisfactory "lager-beer" taste.

### Example 3

### Beer-type beverage preparation

20 kg of glucose syrup (80% dry substance; 51,3 DE, commercially available as CERESTAR 01516) was blended with 180 liter of protein solution (ca 6,5 % ds) and 1 kg spray dried malto dextrin (CERESTAR 01910).

The pH of the mixture has a value of 5,8.
The protein solution used in this example was a purified water extract from wheat flour, rich in free and easily absorbable amino acids like glutamin and asparagine and their respective acids, and leucine.The dry solids content of this water extract is 2,5 to 7,5 % ds which consist of: 18-25 % (w/w) protein; 1,25-1,5 % amino acids; 2,5-5 % starch; 20-30 % reducing sugar; 18-25 % pentosans; 1-1,25 % beta glucans; 2,5-7,5 % lactic acid; 0,2-0,3 % sodium; 1,5-2,5 % potassium; 0,15-0,2 % magnesium; 0,5-1 % chlorine; 0,15-0,4 % sulphate; 1-3 % phosphate. This protein rich solution was treated by means of specific proteolitic enzymes (Umamizyme; Flavourzyme; Sternzym B5026; Sternzym B5021; Sumizyme FP; Promod 192P), and therefore it consisted of the correct level of free amino acids and peptides and soluble HMW proteins. It is aimed to become 100-200 mg Free Amino Nitrogen per liter final wort before fermentation. The specific enzymatic treatment has been done in such a way that undesired peptide tastes are eliminated and the minimum quantity of free amino acids are made available.

The "wort" was boiled for one hour.

At the end of boiling, iso-alpha-acid -extract was added.

The wort was pumped and aerated via the cooling unit directly to the fermentation vessel.

After cooling to 15°C, the density of the corrected wort was 12 °Plato.

The wort was pitched with lager yeast, a Saccharomyces cerevisae; also hopoil-emulsion was added.

The wort fermented at constant temperature of 12°C for 12 days.

After fermentation the "beer" was cooled and matured for one week at 0°C.

After the aging period, the beer was given a final Kieselguhr filtration and was filled in 10 liter kegs.

The product was found to have a satisfactory "lager-beer" taste.

## Claims

1. A process for preparing a beer-type beverage, wherein the wort is prepared from a starch-based glucose syrup, soluble proteinaceous material, water and hop and **characterized in that** the starch-based glucose syrup has the following composition (% on dry solids):
fructose 0.5-5%, dextrose 10-20%, dp2 35-60%, dp3 10-25%, dpn/maltodextrins balance.

2. A process according to claim 1, wherein the soluble proteinaceous material is obtained from wheat, potato, corn, sorghum, barley, rice or tapioca.

3. A process according to claim 2, wherein the soluble proteinaceous material comprises at least one of the amino acids selected from the following group glutamine, aspartic acid, asparagine, glutamic acid, serine, threonine, lysine and arginine and wherein the amino acid composition and concentration is sufficient to enable fermentation with a brewer's yeast.

4. A process according to claim 3, wherein the soluble proteinaceous material has the following amino acid composition (g/100g protein):
Asx: 2.5-8.0, Thr: 2.0-5.0, Ser: 4.0-6.5, Glx: 5.0-34.0, Pro: 3.0-15.0, Gly: 2.0-6.0, Ala: 3.0-6.0, Cys: 3.0-14.0, Val: 2.0-8.0, Met: 0.0-8.0, Ile: 1.0-5.0, Leu: 6.0-10.0, Tyr: 2.0-4.0, Phe: 3.0-5.0, Lys: 1.0-14.0, His: 1.0-5.0, Arg: 2.0-15.0, Trp: 0-1.0.

5. A process for preparing a beer-type beverage according to claim 1, said process consisting of the following steps:
mixing the starch-based glucose syrup, other nutrients and the soluble proteinaceous material to obtain a wort;
boiling the wort to pasteurise and adding iso-alpha-acid-extract;
cooling the wort and aerating;
pitching with lager yeast and adding hop/oil-emulsion;
fermenting the wort to convert the sugar to ethanol and carbon dioxide resulting in a green or young beer-type beverage;
maturing or lagering the fermented beer-type beverage, generally by means of a second fermentation;
filtering, pasteurizing and packaging the beer-type beverage.

6. A process for preparing a beer-type beverage according to claim 1, said process consisting of the following steps:
mixing the starch-based glucose syrup, other nutrients and the soluble proteinaceous material to obtain a wort;
boiling the wort with hop to add flavour;
clarifying and cooling the wort;
cooling the wort and aerating;
pitching with lager yeast;
fermenting the wort to convert the sugar to ethanol and carbon dioxide resulting in a green or young beer-type beverage;
maturing or lagering the fermented beer, generally by means of a second fermentation;
filtering, pasteurizing and packaging the beer-type beverage.

## Patentansprüche

1. Verfahren zum Herstellen eines Getränks vom Biertyp, wobei die Würze aus einem auf Stärke basierenden Glucosesirup, löslichem proteinartigem Material, Wasser und Hopfen hergestellt wird und **dadurch gekennzeichnet ist, dass** der auf Stärke basierende Glucosesirup die nachstehende Zusammensetzung aufweist (% auf Trockenfeststoffe):
Fructose 0,5-5%, Dextrose 10-20%, dp2 35-60%, dp3 10-25%, dpn/Maltodextrine Rest.

2. Verfahren nach Anspruch 1, wobei das lösliche proteinartige Material aus Weizen, Kartoffeln, Mais, Sorghum, Gerste, Reis oder Tapioka erhalten wird.

3. Verfahren nach Anspruch 2, wobei das lösliche proteinartige Material mindestens eine der Aminosäuren, ausgewählt aus der nachstehenden Gruppe Glutamin, Asparaginsäure, Asparagin, Glutaminsäure, Serin, Threonin, Lysin und Arginin umfasst und wobei die Aminosäurezusammensetzung und Konzentration ausreichend ist, um Fermentation mit einer Brauhefe zu ermöglichen.

4. Verfahren nach Anspruch 3, wobei das lösliche proteinartige Material die nachstehende Aminosäurezusammensetzung (g/100 g Protein) aufweist:
Asx: 2,5-8,0, Thr: 2,0-5,0, Ser: 4,0-6,5, Glx: 5,0-34,0, Pro: 3,0-15,0, Gly: 2,0-6,0, Ala: 3,0-6,0, Cys: 3,0-14,0, Val: 2,0-8,0, Met: 0,0-8,0, Ile: 1,0-5,0, Leu: 6,0-10,0, Tyr: 2,0-4,0, Phe: 3,0-5,0, Lys: 1,0-14,0, His: 1,0-5,0, Arg: 2,0-15,0, Trp: 0-1,0.

5. Verfahren zum Herstellen eines Getränks vom Biertyp nach Anspruch 1, wobei das Verfahren aus den nachstehenden Schritten besteht:
Vermischen des auf Stärke basierenden Glucosesirups, anderer Nährstoffe und des löslichen proteinartigen Materials unter Gewinnung einer Würze,
Sieden der Würze zum Pasteurisieren und Zugeben von Iso-α-säureextrakt,
Kühlen der Würze und Belüften,
Anstellen mit Lagerhefe und Zugeben von Hopfen/Ölemulsion,
Fermentieren der Würze zum Umwandeln des Zuckers zu Ethanol und Kohlendioxid zur Erzeugung eines grünen oder jungen Getränks vom Biertyp,
Reifen oder Lagern des fermentierten Getränks vom Biertyp, im Allgemeinen mit Hilfe einer zweiten Fermentation,
Filtrieren, Pasteurisieren und Abfüllen des Getränks vom Biertyp.

6. Verfahren zum Herstellen eines Getränks vom Biertyp nach Anspruch 1, wobei das Verfahren aus den nachstehenden Schritten besteht:
Vermischen des auf Stärke basierenden Glucosesirups, anderer Nährstoffe und des löslichen proteinartigen Materials unter Gewinnung einer Würze,
Sieden der Würze mit Hopfen, um Aroma hinzuzufügen,
Klären und Kühlen der Würze,
Kühlen der Würze und Belüften,
Anstellen mit Lagerhefe,
Fermentieren der Würze zum Umwandeln des Zuckers zu Ethanol und Kohlendioxid zur Erzeugung eines grünen oder jungen Getränks vom Biertyp,
Reifen oder Lagern des fermentierten Biers, im Allgemeinen mit Hilfe einer zweiten Fermentation,
Filtrieren, Pasteurisieren und Abfüllen,des Getränks vom Biertyp.

## Revendications

1. Procédé de préparation d'une boisson de type bière, dans lequel le moût est préparé à partir d'un sirop de glucose à base d'amidon, d'une substance protéinique soluble, d'eau et de houblon, et **caractérisé en ce que** le sirop de glucose à base d'amidon a la composition suivante (% de matière sèche) :
fructose 0,5 à 5 %, dextrose 10 à 20 %, dp2 35 à 60 %, dp3 10 à 25 %, équilibre dpn/maltodextrines.

2. Procédé selon la revendication 1, dans lequel la substance protéinique soluble est obtenue à partir de blé, de pomme de terre, de maïs, de sorgho, d'orge, de riz ou de tapioca.

3. Procédé selon la revendication 2, dans lequel la substance protéinique soluble comprend au moins l'un des acides aminés choisis dans le groupe suivant : la glutamine, l'acide aspartique, l'asparagine, l'acide glutamique, la sérine, la thréonine, la lysine et l'arginine, et dans lequel la composition et la concentration des acides aminés sont suffisantes pour permettre la fermentation avec une levure de bière.

4. Procédé selon la revendication 3, dans lequel la substance protéinique soluble a la composition d'acides aminés suivante (g/100 g de protéine) :
Asx : 2, 5 à 8, 0, Thr : 2, 0 à 5, 0, Ser : 4, 0 à 6, 5, Glx : 5,0 à 34,0, Pro : 3,0 à 15,0, Gly : 2, 0 à 6, 0, Ala : 3,0 à 6,0, Cys : 3,0 à 14,0, Val : 2,0 à 8,0, Met : 0,0 à 8,0, Ile : 1,0 à 5,0, Leu : 6,0 à 10,0, Tyr : 2,0 à 4,0, Phe : 3,0 à 5,0, Lys : 1,0 à 14,0, His : 1,0 à 5,0, Arg : 2,0 à 15,0, Trp : 0 à 1,0.

5. Procédé de préparation d'une boisson de type bière selon la revendication 1, ledit procédé étant constitué des étapes suivantes :
mélanger le sirop de glucose à base d'amidon, lesautres nutriments et la substance protéinique soluble pour obtenir un moût ;
porter le moût à ébullition pour le pasteuriser et ajouter un extrait d'acide iso-alpha ;
refroidir le moût et l'aérer ;
ensemencer avec de la levure blonde et ajouter une émulsion houblon/huile ;
fermenter le moût pour transformer le sucre en éthanol et en dioxyde de carbone, pour donner une boisson de type bière verte ou jeune ;
effectuer la maturation ou blondir la boisson de type bière fermentée, en général par le biais d'une seconde fermentation ;
filtrer, pasteuriser et conditionner la boisson de type bière.

6. Procédé de préparation d'une boisson de type bière selon la revendication 1, ledit procédé étant constitué des étapes suivantes :
mélanger le sirop de glucose à base d'amidon, lesautres nutriments et la substance protéinique soluble pour obtenir un moût ;
porter le moût à ébullition avec du houblon pour ajouter de la saveur ;
clarifier et refroidir le moût ;
refroidir le moût et l'aérer ;
ensemencer avec de la levure blonde;
fermenter le moût pour transformer le sucre en éthanol et en dioxyde de carbone, pour donner une boisson de type bière verte ou jeune ;
effectuer la maturation ou blondir la bière fermentée, en général par le biais d'une seconde fermentation ;
filtrer, pasteuriser et conditionner la boisson de type bière.
